# EUROPEAN PATENT APPLICATION

(11) **EP 2 296 336 A1**
(43) Date of publication of application: **16.03.2011**
(21) Application number: 09807877.7
(22) Date of filing: 19.08.2009
(51) Int. Cl.: H04L 29/06

(54) **METHOD, APPARATUS AND SYSTEM FOR BEARING THE MULTIPROTOCOL LABEL SWITCHING PACKET IN THE PASSIVE OPTICAL NETWORK (PON)**

(30) Priority: 19.08.2008 CN 200810145767
(71) Applicant: Huawei Technologies Co., Ltd., Longgang District, Shenzhen Guangdong 518129 (CN)
(72) Inventor: ZHENG, Ruobin c/o Huawei Technologies Co.Ltd., Int.Prop.Dept., Shenzhen (CN)
(74) Representative: Kreuz, Georg Maria
(86) International application number: PCT/CN2009/073342
(87) International publication number: WO 2010/020178

(57) **Abstract**

A method for bearing a multi-protocol label switching, MPLS, packet in a passive optical network, PON, a receiving method, an optical network unit, ONU,/optical network terminal, ONT,/optical line terminal, OLT, and a communication system are provided, which relate to an optical communication network, and are designed to solve the technical problem that protocol stack layers are complicated when a PON and a mobile network are coupled. The sending method includes the following steps. An MPLS packet is obtained. The MPLS packet is encapsulated into a Gigabit PON, GPON, encapsulation mode, GEM, frame. The GEM frame is sent. The receiving method includes the following steps. A GEM frame is received. The GEM frame is decapsulated into an MPLS packet. The MPLS packet is sent. Therefore, tight coupling between the PON and the mobile network is realized.

## Description

The application claims priority to Chinese Patent Application No. 200810145767.8, filed on August 19, 2008, entitled "Method, Device, and System for Bearing Multi-Protocol Label Switching Packet in Passive Optical Network".

### FIELD OF THE TECHNOLOGY

The present invention relates to an optical communication network, and more particularly to a method, an optical network unit, ONU,/optical network terminal, ONT,/optical line terminal, OLT, and system for bearing a multi-protocol label switching, MPLS, packet in a passive optical network, PON.

### BACKGROUND OF THE INVENTION

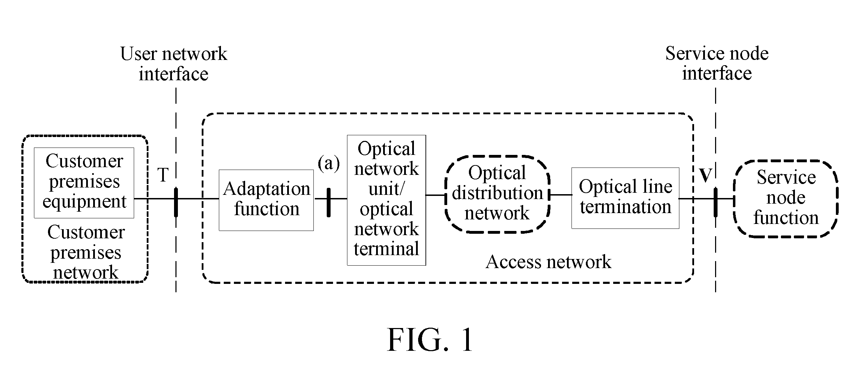

The entire reference architecture of an optical access network, OAN, is formed by a customer premises network, CPN, an access network, and a service node function, as shown in FIG. 1. In the access network, an adaptation function, AF, is optional equipment, which mainly provides inter-conversion between an optical network unit, ONU,/optical network terminal, ONT,/ONT interface and a user network interface, UNI,. The AF may also be built in the ONU/ONT. In this way, a reference point (a) may be omitted. The AF may also be placed behind an optical line terminal, OLT, to perform inter-conversion between the OLT interface and a service node interface, SNI. The AF can be regarded not only as the function of the CPN but also as the function of the access network. Main network elements of the access network include an OLT, an optical distribution network, ODN, an ONU/ONT/ONT, and an AF. T is a reference point of the UNI interface and V is a reference point of the SNI interface. The OLT provides a network interface for the ODN and is connected to one or more ODNs. The ODN provides a transmission means for the OLT and the ONU/ONT. The ONU/ONT provides a user side interface for the OAN and is connected to the ODN. Customer premises equipment, CPE, is connected to the AF through a UNI interface (for example, through a digital subscriber loop, DSL). The AF converts a packet format from a UNI interface format to a format of an (a) interface (for example, an Ethernet link) capable of being connected to the ONU/ONT. The ONU/ONT then converts the packet into a format that can be transported on the ODN. Finally, the OLT converts the packet into a packet format of the SNI interface (for example, the Ethernet link) and then accesses a service node.

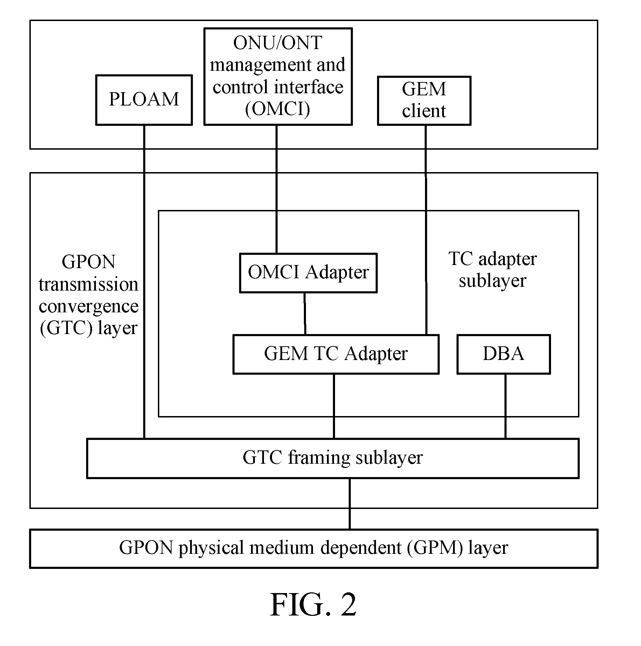

A passive optical network, PON, includes one OLT installed in a central control station and a set of matching ONUs/ONTs installed at a user's premise. The PON includes three technologies, namely, asynchronous transfer mode, ATM, PON, APON, Ethernet PON, EPON, and gigabit PON, GPON. At the same time, the PON further includes xPON evolved from existing EPON and GPON technologies to a next generation PON network. Taking the GPON as an example, the structure of a GPON protocol stack is as shown in FIG. 2, which may be divided into three layers from bottom to top.

One layer is a GPON physical medium dependent layer, GPM, which is responsible for transmission of a GPON transmission convergence, GTC, frame on an optical fiber, transports an optical signal that flows on the optical fiber to a PON media access control, MAC, layer for data processing, and converts a data signal transported from the PON MAC layer into an optical signal.

Another layer is an MAC layer. For the GPON, the MAC layer is a GTC layer, which may be divided into two sub-layers.

### (a) Transmission Convergence, TC, Adapter Sub-layer

At the TC adapter sub-layer, a service received from a GPON encapsulation mode, GEM, client is cut into GEM data blocks, and the GEM data blocks in the GTC frame are assembled into corresponding service data.

### (b) GTC Framing Sub-layer

Framing processing of a GTC TC frame is performed at the GTC framing sub-layer. Specifically, a GTC TC header is added before a GEM data block to form a complete GTC TC frame according to control information of physical layer operation, administration, and maintenance, PLOAM, and the GTC TC frame is sent to the GPM. At the GTC framing sub-layer, header information of the GTC TC frame received from the GPM further needs to be removed, and the GTC TC frame is submitted to the TC adapter sub-layer for processing.

An encapsulation mode of service data provided by the GTC layer of the GPON is a GEM encapsulation mode, which is a variable-length encapsulation mode and supports change of a length of a GEM encapsulation frame according to a length of the service data. Currently, the GEM encapsulation mode mainly supports encapsulation of an Ethernet packet.

The GPON further has a layer. In addition to a GEM client, the layer further includes (1) a PLOAM, responsible for operation, administration, and maintenance functions of a PON physical layer, and (2) an ONU/ONT management and control interface, OMCI, where data of the OMCI is the same as common service data in terms of being capable of being encapsulated into a GEM data block for transmission.

Multi-protocol label switching, MPLS, seamlessly integrates flexibility of an Internet Protocol, IP, routing technology and simplicity of layer 2 switching, so that IP forwarding efficiency is improved. More importantly, the MPLS establishes a connection-oriented label switching path, so as to provide end-to-end quality of service, QoS, flexibly, and further perform traffic engineering and provide a virtual private network, VPN, service, thereby providing manageable and operable networks for operators.

As a shim, the MPLS may be applied to a layer 3 IP data packet, an MPLS label is added before the IP packet, a label switching path is established, and then an L2 layer header is adds for transport. The L2 header may be a Point-to-Point Protocol, PPP, header or an Ethernet header.

The MPLS may also be applied to a layer 2 data network. Layer 2 data such as Ethernet, ATM, or frame relay, FR, is emulated and encapsulated, so as to establish a virtual channel, VC, or pseudo wires, PW, in which the layer 2 data is transported. A structure of an MPLS-based layer 2 or layer 3 VPN, (L2 or L3 VPN) uses an MPLS inner layer label to identify different VCs/PWs (that is, a layer 2 tunnel) and uses an outer layer label as a public tunnel. Equipment in a service operator network does not need to maintain any layer 2 information but only performs MPLS forwarding on a public network tunnel according to MPLS label information.

In the prior art, a packet switch network, PSN is usually used as a metropolitan area aggregation network after the PON. If the PON is used as a base station backhaul technology, the MPLS is required to be movable down to the ONU/ONT or the base station, so as to form end-to-end connection capability in a network following the base station, thereby supporting wireless voice service. However, in the prior art, the required objective is achieved as follows: Firstly, the Ethernet bears the MPLS to perform QoS mapping from the MPLS to the Ethernet, and then the PON bears the Ethernet to perform secondary QoS mapping from the Ethernet to the PON, resulting in many protocol stack layers, low bearing efficiency, and great complexity and high costs for implementation. In addition, the backhaul of the base station imposes high requirements on the bandwidth of the PON, while the PON is an access technology that shares medium and is a bottleneck of bandwidth for a network, and packet header overhead is large due to many protocol stack layers, causing a bandwidth bottleneck problem of the PON.

### SUMMARY OF THE INVENTION

The present invention is directed to a method for bearing a multi-protocol label switching, MPLS, packet in a passive optical network, PON, a method for receiving an MPLS packet in a PON, an MPLS encapsulation device, an MPLS decapsulation device, and a communication system, so as to simplify protocol stack layers when the PON is used for base station backhaul, reduce overhead of the protocol stack layers, and improve bearing efficiency.

In order to achieve the above objectives, the present invention adopts the following technical solutions.

According to its first aspect, the present invention provides a method for bearing an MPLS packet in a PON, which includes the following steps.

An MPLS packet is obtained.

The MPLS packet is encapsulated into a gigabit PON, GPON, encapsulation mode, GEM, frame.

The GEM frame is sent.

According to its second aspect, the present invention provides a method for receiving an MPLS packet in a PON, which includes the following steps.

A GEM frame is received.

The GEM frame is decapsulated into an MPLS packet.

The MPLS packet is sent.

According to its third aspect, the present invention provides an MPLS encapsulation device, which includes an MPLS processing unit, an encapsulation processing unit, and a sending unit.

The MPLS processing unit is configured to obtain an MPLS packet.

The encapsulation processing unit is configured to encapsulate the MPLS packet into a GEM frame.

The sending unit is configured to send the GEM frame.

According to its fourth aspect, the present invention provides an MPLS decapsulation device, which includes a receiving unit, a decapsulation processing unit, and an MPLS sending unit.

The receiving unit is configured to receive a GEM frame.

The decapsulation processing unit is configured to decapsulate the GEM frame into an MPLS packet.

The MPLS sending unit is configured to send the MPLS packet.

According to its fifth aspect, the present invention provides an optical communication system, which includes an MPLS encapsulation device and an MPLS decapsulation device. The MPLS encapsulation device is configured to:
obtain an MPLS packet;
encapsulate the MPLS packet into a GEM frame; and
send the GEM frame.

The MPLS decapsulation device is configured to:
receive a GEM frame;
decapsulate the GEM frame into an MPLS packet; and
send the MPLS packet.

In the technical solutions according to the present invention, an optical line terminal, OLT, encapsulates a received MPLS packet into a GEM frame and sends the GEM frame to an optical network unit, ONU,/optical network terminal, ONT; and the ONU/ONT decapsulates the GEM frame received from the OLT into an MPLS packet and send the MPLS packet. Or, the ONU/ONT encapsulates a received MPLS packet into a GEM frame and sends the GEM frame to the OLT; and the OLT decapsulates the GEM frame received from the ONU/ONT into an MPLS packet and sends the MPLS packet. Therefore, tight coupling between the PON and a mobile network is realized. Since an MPLS over GEM transmission mode is adopted, protocol stack layers when the PON is used for base station backhaul are simplified, overhead of the protocol stack layers is reduced effectively, the bearing efficiency is improved, and the bandwidth bottleneck problem of the PON in the base station backhaul is solved.

### BRIEF DESCRIPTION OF THE DRAWINGS

FIG. 1 is an architectural view of an OAN in the prior art;
FIG. 2 is a schematic view of GPON protocol layering in the prior art;
FIG. 3 is a flow chart of a method for bearing an MPLS packet in a PON according to a first embodiment of the present invention;
FIG. 4 is a flow chart of a process of encapsulating an MPLS packet into a GEM frame in a method for bearing an MPLS packet in a PON according to a second embodiment of the present invention;
FIG. 5 is a schematic view of encapsulating the MPLS packet into the GEM frame in FIG. 4;
FIG. 6 is a schematic view of a first method for mapping the MPLS packet after segmentation or assembly to a payload of a GEM frame in FIG. 4;
FIG. 7 is a schematic view of a second method for mapping the MPLS packet after segmentation or assembly to a payload of a GEM frame in FIG. 4;
FIG. 8 is a schematic view of a third method for mapping the MPLS packet after segmentation or assembly to a payload of a GEM frame in FIG. 4;
FIG. 9 is a flow chart of a method for receiving an MPLS packet in a PON according to a first embodiment of the present invention;
FIG. 10 is a flow chart of a process of GEM decapsulation of an MPLS packet borne in a GPON in a method for receiving an MPLS packet in a PON according to a second embodiment of the present invention;
FIG. 11 is a structural view of an ONU/ONT/OLT according to a first embodiment of the present invention;
FIG. 12 is a structural view of an ONU/ONT/OLT according to a second embodiment of the present invention;
FIG. 13 is a structural view of an ONU/ONT/OLT according to a first embodiment of the present invention;
FIG. 14 is a structural view of an ONU/ONT/OLT according to a second embodiment of the present invention;
FIG. 15 is a structural view of an optical communication system according to an embodiment of the present invention;
FIG. 16 is a network structural diagram of a first application scenario of an optical communication system according to an embodiment of the present invention;
FIG. 17 is a network structural diagram of a second application scenario of an optical communication system according to an embodiment of the present invention; and
FIG. 18 is a network structural diagram of a third application scenario of an optical communication system according to an embodiment of the present invention.

### DETAILED DESCRIPTION OF THE EMBODIMENTS

A method, an optical network unit, ONU,/optical network terminal, ONT,/optical line terminal, OLT, and a system for bearing a multi-protocol label switching, MPLS, packet in a passive optical network, PON, according to embodiments of the present invention are illustrated in detail in the following with reference to the accompanying drawings.

In an embodiment, the present invention provides a method for bearing an MPLS packet in a PON.

The embodiment of the present invention may be applied in a first scenario where an ONU/ONT obtains an MPLS packet from a customer premises network (CPN) or a second scenario where an OLT obtains an MPLS packet from a service node function. In the embodiment of the present invention, the second scenario, that is, the OLT obtains the MPLS packet from the service node function, is taken as an example for illustration.

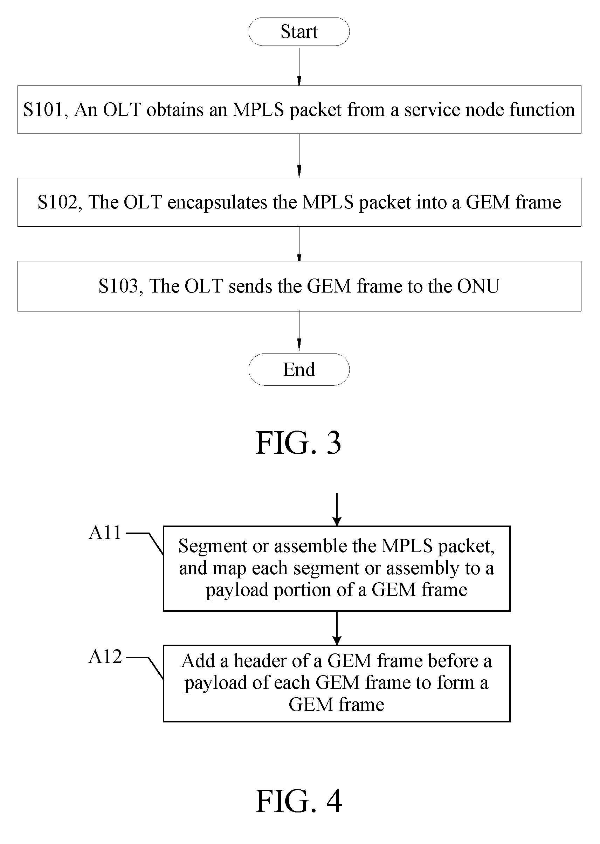

As shown in FIG. 3, an embodiment of the present invention provides a method for bearing an MPLS packet in a PON.

The method for bearing an MPLS packet in a PON in the embodiment of the present invention includes the following steps.

In step S101, an OLT obtains an MPLS packet from a service node function.

Optionally, the step of obtaining the MPLS packet may include: receiving a pseudo wires (PW) data payload, and encapsulating the PW data payload into an MPLS packet having an inner layer label.

The MPLS packet having the inner layer label may further be encapsulated into an MPLS packet having an outer layer label. The MPLS inner layer label identifies different virtual channels (VCs)/PWs (that is, a layer 2 tunnel), and the outer layer label is used as a public tunnel.

Or, an MPLS packet may be obtained directly.

In step S102, the OLT encapsulates the MPLS packet into a gigabit PON, GPON, encapsulation mode, GEM, frame.

In step S103, the OLT sends the GEM frame to the ONU/ONT.

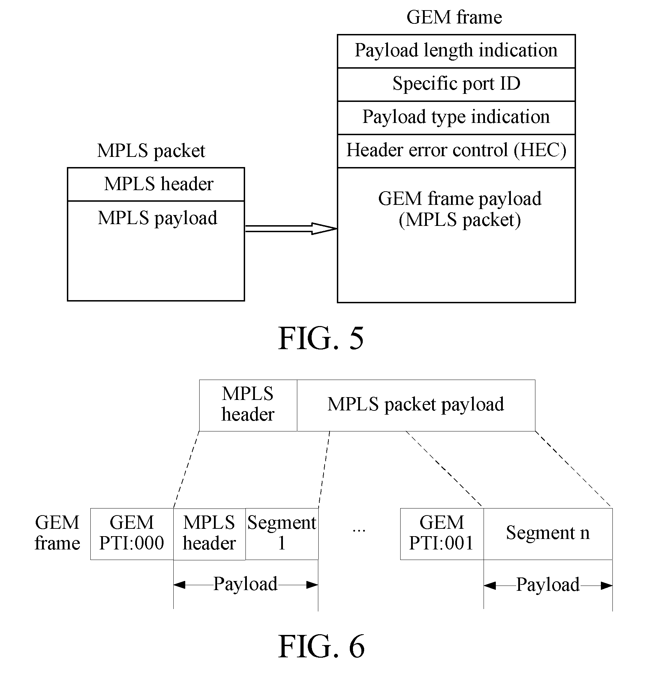

FIG. 5 is a schematic view of encapsulating an MPLS packet into a GEM frame.

As shown in FIG. 4, a process of encapsulating the MPLS packet into the GEM frame may include two steps: mapping and framing.

In step A11, the MPLS packet is segmented or assembled, and each segment or assembly is mapped to a payload portion of a GEM frame.

In step A12, a header of a GEM frame is added before the payload of each GEM frame to form a GEM frame.

Step A11 of segmenting or assembling the MPLS packet and mapping each segment or assembly to the payload portion of the GEM frame may adopt, but is not limited to, the following methods.

In a first method, as shown in FIG. 6, the MPLS packet is divided into at least two MPLS packet segments, and the at least two MPLS packet segments are mapped to payloads of different GEM frames respectively. That is to say, a payload of the MPLS packet is divided into multiple segments, the MPLS packet of each segment is mapped to a payload portion of a GEM frame respectively, and only a segment 1 has an MPLS packet header.

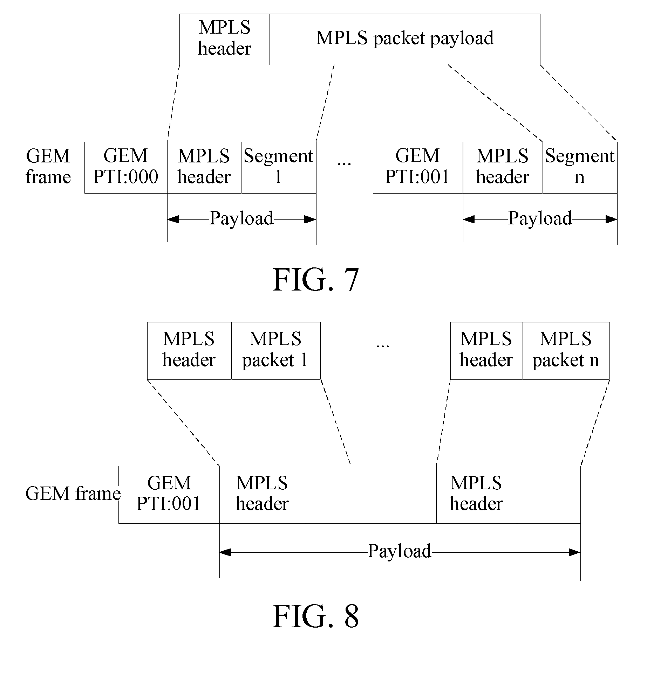

Or, in a second method, as shown in FIG. 7, an MPLS packet payload and an MPLS header are extracted, the MPLS payload is divided into at least two segments, an MPLS header is added before each segment to form a new segment respectively, and the new segments are mapped to payloads of different GEM frames respectively. That is to say, a payload of the MPLS packet is divided into multiple segments, the MPLS packet of each segment is mapped to a payload portion of a GEM frame respectively, and an MPLS packet header is duplicated for each segment.

Or, in a third method, as shown in FIG. 8, at least one MPLS packet is assembled, and the assembled MPLS packet is mapped to a payload of the same GEM frame. That is to say, multiple MPLS packets are simply assembled with respective MPLS packet headers reserved, and the assembled MPLS packet is mapped to a payload portion of a GEM frame.

In step A12 in which a header of a GEM frame is added before a payload of each GEM frame to form a GEM frame, a GEM Port identification (ID) field in a specific range may be employed to represent that an MPLS over GEM mode is adopted. That is to say, after the MPLS packet is segmented or assembled, each segmented or assembled MPLS packet is mapped to a payload portion of a GEM frame, then a 5-byte GEM header is added, so as to form a GEM frame. The GEM header has 5 bytes, and includes four portions, namely, a payload length indication (PLI, having a size of 12 bits), a port ID (having a size of 12 bits), a payload type indication (PTI, having a size of 3 bits), and a header error control (HEC, having a size of 13 bits).

According to a least significant bit of the PTI, the least significant bit of the PTI may be utilized to indicate whether a segment is a last segment of the MPLS packet. In the embodiment of the present invention, when the PTI is "000", it represents that the segment is not the last segment; when the PTI is "001", it represents that the segment is the last segment.

In the method for bearing the MPLS packet in the PON in the embodiment of the present invention, when the embodiment of the present invention is applied in a first scenario, the ONU/ONT obtains an MPLS packet from the CPN, the ONU/ONT encapsulates the MPLS packet into a GEM frame, and the ONU/ONT sends the GEM frame to the OLT; when the embodiment of the present invention is applied in a second scenario, the OLT obtains an MPLS packet from the service node function, the OLT encapsulates the MPLS packet into a GEM frame, and the OLT sends the GEM frame to the ONU/ONT. Therefore, tight coupling between the PON and a mobile network is realized. Since an MPLS over GEM transmission mode is adopted, overhead of protocol stack layers is effectively reduced and bearing efficiency is improved.

Corresponding to the method for bearing the MPLS packet in the PON according to the embodiment of the present invention, the present invention further provides a method for receiving an MPLS packet in a PON. The embodiment of the present invention may be applied in a first scenario where an OLT receives a GEM frame from an ONU/ONT or a second scenario where an ONU/ONT receives a GEM frame from an OLT. The second scenario is taken as an example for illustration in the following.

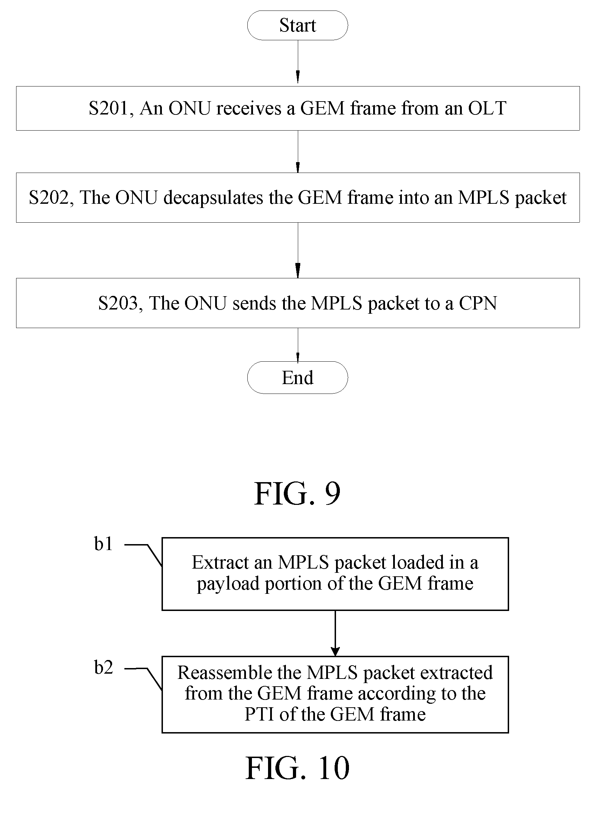

As shown in FIG. 9, the method for receiving the MPLS packet in the PON according to the embodiment of the present invention includes the following steps.

In step S201, an ONU/ONT receives a GEM frame from an OLT.

In step S202, the ONU/ONT decapsulates the GEM frame into an MPLS packet.

The GEM header includes a Port ID field. According to the GEM Port ID field, it is determined whether MPLS over GEM is adapted as a transmission mode. Optionally, the GEM header includes a service type field. According to the service type field, it is determined whether MPLS over GEM is adopted as a transmission mode.

The GEM header includes a PTI field. By using a least significant bit of the PTI, it is determined whether the GEM frame includes a last segment of the MPLS packet.

Corresponding to the encapsulation of an MPLS packet into a GEM frame in FIGs. 5, 6, 7, and 8, a process of GEM decapsulation of an MPLS packet borne in a GPON is as shown in FIG. 10, which is an inverse process of the process of encapsulating an MPLS packet into a GEM frame in FIG. 4, and includes the following steps.

In step b1, it can be determined whether an MPLS over GEM mode is adopted according to a specific GEM Port ID field or service type field, and when it is determined that the MPLS over GEM mode is adopted, an MPLS packet loaded in a payload portion of a GEM frame is extracted in the MPLS over GEM mode, that is, a GEM frame payload is extracted from the GEM frame.

In step b2, multiple MPLS packets extracted from the GEM frame is reassembled according to a PTI of the GEM frame, that is, the extracted GEM frame payload is assembled or segmented so as to generate an MPLS packet.

The step of assembling or segmenting the extracted GEM frame payload so as to generate the MPLS packet may adopt, but is not limited to, the following methods.

In a first method, at least two GEM frame payloads are acquired, and assembled as an MPLS packet. This process is an inverse process of segmenting or assembling the MPLS packet and mapping each segment or assembly to a payload portion of a GEM frame in FIG. 6.

Or, in a second method, at least two GEM frame payloads are acquired, MPLS headers in other GEM frame payloads than the first GEM frame payload are removed, and the first GEM frame payload and the other GEM frame payloads with the MPLS headers removed are assembled as an MPLS packet. This process is an inverse process of segmenting or assembling the MPLS packet and mapping each segment or assembly to a payload portion of a GEM frame in FIG. 7.

Or, in a third method, a GEM frame payload is acquired, and the GEM frame payload is divided into at least one MPLS. This process is an inverse process of segmenting or assembling an MPLS packet and mapping each segment or assembly to a payload portion of a GEM frame in FIG. 8.

In step S203, the ONU/ONT sends the MPLS packet to a CPN.

The embodiment of the present invention may be applied in two scenarios. If the embodiment is applied in a first scenario, before the step that the OLT sends the MPLS packet to the service node function, the method further includes: assembling the MPLS packet when the OLT has multiple PON interfaces and communicates with ONUs/ONTs that belong to different PON interfaces through at least two optical distribution networks, ODNs. The step that the OLT sends the MPLS packet to the service node function is as follows: the OLT sends the assembled MPLS packet to the service node function.

When the embodiment of the present invention is applied in a first scenario, the OLT receives a GEM frame from the ONU/ONT; the OLT encapsulates the GEM frame into an MPLS packet; and the OLT sends the MPLS packet to the service node function. When the embodiment is applied in a second scenario, the ONU/ONT receives a GEM frame from the OLT; the ONU/ONT encapsulates the GEM frame into an MPLS packet; and the ONU/ONT sends the MPLS packet to the CPN. Therefore, tight coupling between the PON and a mobile network is realized. Since the MPLS over GEM transmission mode is adopted, overhead of protocol stack layers is effectively reduced and bearing efficiency is improved.

Person of ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, a compact disk read-only memory (CD-ROM), a read-only memory (ROM), or a random access memory (RAM).

In an embodiment, the present invention further provides an MPLS encapsulation device.

A method for bearing an MPLS packet in a PON has two application scenarios. In one scenario, an ONU/ONT obtains an MPLS packet from a CPN. In this application scenario, the MPLS encapsulation device is placed in the ONU/ONT. In the other scenario, an OLT obtains an MPLS packet from a service node function. In this application scenario, the MPLS encapsulation device is placed in the OLT.

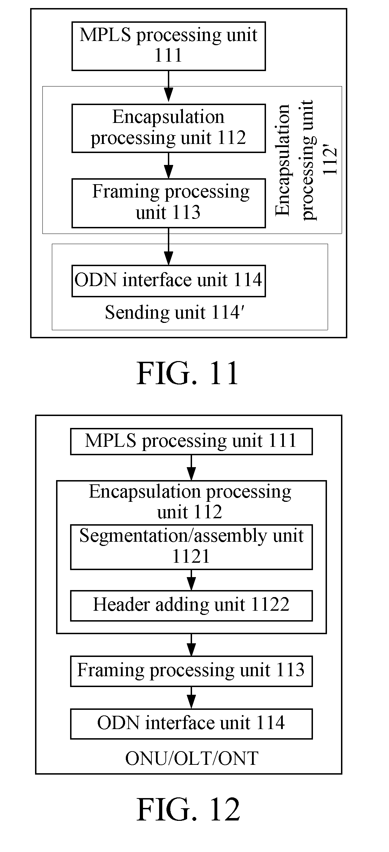

As shown in FIG. 11, the MPLS encapsulation device includes an MPLS processing unit 111, an encapsulation processing unit 112', and a sending unit 114'.

The MPLS processing unit 111 is configured to obtain an MPLS packet.

The encapsulation processing unit 112' is configured to encapsulate the MPLS packet into a GEM frame.

The sending unit 114' is configured to send the GEM frame.

The encapsulation processing unit 112' further includes an encapsulation processing unit 112 and a framing processing unit 113.

The encapsulation processing unit 112 is configured to encapsulate the MPLS packet into a GEM frame.

The framing processing unit 113 is configured to perform GPON transmission convergence (GTC) layer framing processing on the GEM frame, so as to generate a GTC transmission convergence (TC) frame.

The sending unit 114' further includes an ODN interface unit 114 configured to perform physical layer processing on the GTC TC frame and send the processed GTC TC frame.

As shown in FIG. 12, the encapsulation processing unit 112 includes a segmentation/assembly unit 1121 and a header adding unit 1122.

The segmentation/assembly unit 1121 is configured to segment or assemble an MPLS packet and map the segmented or assembled MPLS packet to a payload of a GEM frame.

The header adding unit 1122 is configured to add a GEM header before the payload of the GEM frame.

The segmentation/assembly unit 1121 is specifically configured to:
extract an MPLS packet payload and an MPLS header, divide an MPLS packet into at least two MPLS packet segments, and map the at least two MPLS packet segments to payloads of different GEM frames respectively; or
extract an MPLS packet payload and an MPLS header, divide the MPLS payload into at least two segments, add an MPLS header before each segment to form a new segment respectively, and map the new segments to payloads of different GEM frames respectively; or
assemble at least one MPLS packet, and map the assembled MPLS packet to a payload of the same GEM frame.

The header adding unit adds a header of a GEM frame before a payload of each GEM frame to form a GEM frame. A GEM Port ID field in a specific range may be employed to represent that an MPLS over GEM mode is adopted. A least significant bit of a PTI is set according to whether the segment is a last segment of the MPLS packet.

In the ONU/ONT/OLT in the embodiment of the present invention, the MPLS processing unit obtains an MPLS packet, the encapsulation processing unit encapsulates the MPLS packet into a GEM frame, the framing processing unit performs GTC framing processing on the GEM frame to generate a GTC TC frame, and the ODN interface unit performs physical layer processing on the GTC TC frame and sends the processed GTC TC frame. Since the MPLS over GEM transmission mode is adopted, overhead of protocol stack layers is effectively reduced and bearing efficiency is improved. In the embodiment of the present invention, the MPLS over GEM transmission mode is adopted, so that overhead of the protocol stack layers is effectively reduced and bearing efficiency is improved.

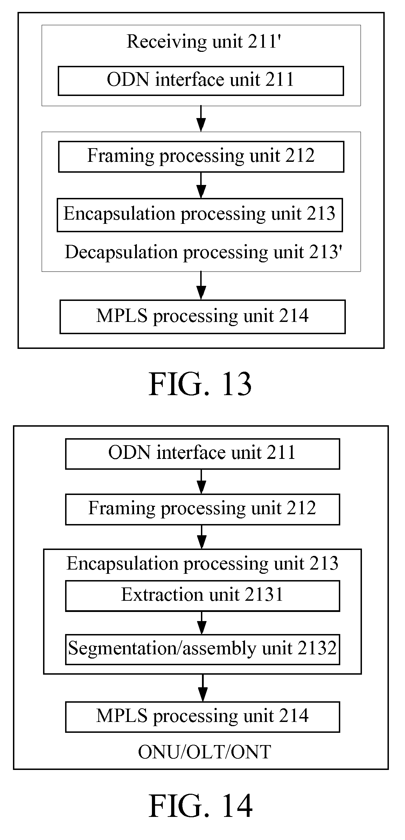

As shown in FIG. 13, in an embodiment, the present invention provides an MPLS decapsulation device.

A method for bearing an MPLS packet in a PON has two application scenarios. In one scenario, an ONU/ONT obtains an MPLS packet from a CPN. In this application scenario, the MPLS decapsulation device is placed in the OLT. In the other scenario, an OLT obtains an MPLS packet from a service node function. In this application scenario, the MPLS decapsulation device is placed in the ONU/ONT.

The MPLS decapsulation device includes a receiving unit 211', a decapsulation processing unit 213', and an MPLS sending unit 214.

The receiving unit 211' is configured to receive a GEM frame.

The decapsulation processing unit 213' is configured to decapsulate the GEM frame into an MPLS packet.

The MPLS sending unit 214 is configured to send the MPLS packet.

The receiving unit 211' further includes an ODN interface unit 211.

The ODN interface unit 211 is configured to receive a packet and perform physical layer processing on the received packet to generate a GTC TC frame.

The decapsulation processing unit 213' further includes a framing processing unit 212, an encapsulation processing unit 213, and an MPLS processing unit 214.

The framing processing unit 212 is configured to perform GTC de-framing processing on the GTC TC to generate a GEM frame.

The encapsulation processing unit 213 is configured to decapsulate the GEM frame into an MPLS packet.

The MPLS processing unit 214 is configured to send the MPLS packet.

As shown in FIG. 14, the encapsulation processing unit 213 includes an extraction unit 2131 and a segmentation/assembly unit 2132.

The extraction unit 2131 is configured to extract a GEM frame payload from the GEM frame.

The segmentation/assembly unit 2132 is configured to segment or assemble the extracted GEM frame payload to generate an MPLS packet.

The segmentation/assembly unit 2132 is specifically configured to:
acquire at least two GEM frame payloads, and assemble the at least two GEM frame payloads as an MPLS packet; or
acquire at least two GEM frame payloads, remove MPLS headers in other GEM frame payloads than the first GEM frame payload, and assemble the first GEM frame payload and the other GEM frame payloads with the MPLS headers removed; or
extract a GEM frame payload from a GEM frame to obtain at least one MPLS packet directly.

In the ONU/ONT/OLT for bearing the MPLS packet in the PON according to the embodiment of present invention, the ODN interface unit receives a packet and performs physical layer processing on the received packet, so as to generate a GTC TC frame, the framing processing unit performs GTC de-framing processing on the GTC TC, so as to generate a GEM frame, the encapsulation processing unit decapsulates the GEM frame into an MPLS packet, and the MPLS processing unit sends the MPLS packet. Since the MPLS over GEM transmission mode is adopted, overhead of protocol stack layers is effectively reduced and bearing efficiency is improved.

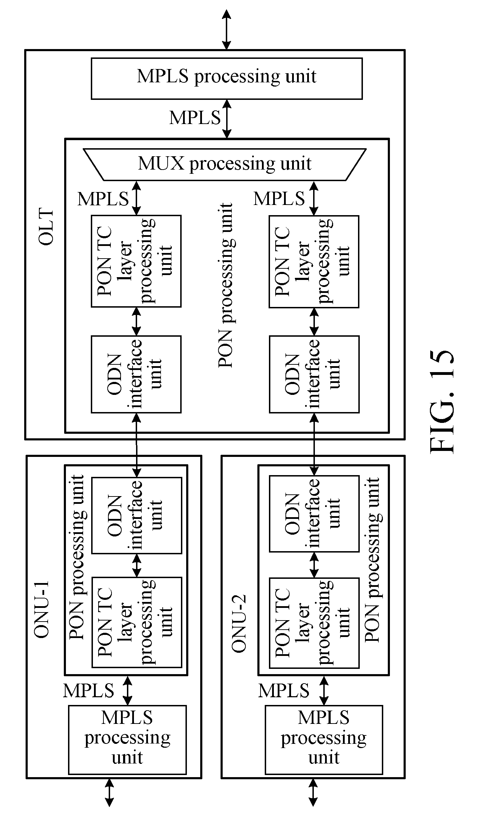

As shown in FIG. 15, in an embodiment, the present invention provides an optical communication system, which includes an ONU/ONT, an OLT, and an ODN. The ONU/ONT is connected to the OLT through the ODN.

The ONU/ONT is configured to encapsulate the received MPLS packet into a GEM frame, perform GTC framing processing on the GEM frame to generate a GTC TC frame, perform physical layer processing on the GTC TC frame, and send the processed GTC TC frame to the OLT.

The OLT is configured to perform physical layer processing on the packet received from the ONU/ONT to generate a GTC TC frame, perform GTC de-framing processing on the GTC TC to generate a GEM frame, decapsulate the GEM frame into an MPLS packet, and send the MPLS packet.

Also, the OLT is further configured to encapsulate the received MPLS packet into a GEM frame, perform GTC framing processing on the GEM frame to generate a GTC TC frame, perform physical layer processing on the GTC TC frame, and send the processed GTC TC frame to the ONU/ONT.

The ONU/ONT is further configured to perform physical layer processing on the received packet to generate a GTC TC frame, perform GTC de-framing processing on the GTC TC to generate a GEM frame, determine whether a transmission mode is MPLS over GEM according to a Port ID of a GEM header, and if a transmission mode is MPLS over GEM, decapsulate the GEM frame into an MPLS packet, and send the MPLS packet.

The ONU/ONT and the OLT respectively include an MPLS processing unit and a PON processing unit.

The MPLS processing unit is configured to realize label switch router, LSR, or label edge router, LER, functions.

The PON processing unit is responsible for realizing a GPON protocol stack and is formed by a PON TC layer processing unit and an ODN interface unit. The PON TC processing unit realizes GTC functions in the GPON protocol stack, and accomplishes GEM encapsulation or decapsulation processing on the MPLS packet. The ODN interface unit realizes GPON physical medium, GPM, dependent layer functions in the GPON protocol stack.

Optionally, the PON processing unit of the OLT further includes: an MUX processing unit configured to assemble multiple MPLSs into one MPLS when the OLT has multiple PON interfaces and communicates with ONUs/ONTs that belong to different PON interfaces through at least two ODNs or segment one MPLS into multiple MPLSs.

The specific function of each part is described in the following in specific scenarios when the OLT communicates with the ONU/ONT.

The MPLS processing unit is configured to obtain an MPLS packet.

The PON TC unit is configured to encapsulate the received MPLS packet into a GEM frame, perform GTC framing processing on the GEM frame to generate a GTC TC frame, perform physical layer processing on the GTC TC frame, and send the processed GTC TC frame.

Also, the PON unit is further configured to receive a packet, perform physical layer processing on the received packet to generate a GTC TC frame, perform GTC de-framing processing on the GTC TC to generate a GEM frame, and decapsulate the GEM frame into an MPLS packet.

The MPLS processing unit is further configured to send an MPLS packet.

The PON processing unit includes a PON TC layer processing unit and an ODN interface unit.

The PON TC layer processing unit is configured to encapsulate the received MPLS packet into a GEM frame and perform GTC framing processing on the GEM frame to generate a GTC TC frame.

The ODN interface unit is configured to perform physical layer processing on the GTC TC frame and send the processed GTC TC frame.

Also, the ODN interface unit is further configured to receive a packet, and perform physical layer processing on the received packet to generate a GTC TC frame.

The PON TC layer processing unit is further configured to perform GTC deframing processing on the GTC TC to generate a GEM frame and decapsulate the GEM frame into an MPLS packet.

In the optical communication system in the embodiment of the present invention, tight coupling between the PON and a mobile network is realized. Since an MPLS over GEM transmission mode is adopted, overhead of protocol stack layers is effectively reduced and bearing efficiency is improved.

As shown in a functional block diagram of an ONU/ONT/OLT in FIG. 15, the OLT is connected to multiple ONUs/ONTs at the same time through the same ODN via one PON interface. Or, the OLT may also have multiple PON interfaces and be connected to ONUs/ONTs that belong to different PON interfaces through at least two ODNs.

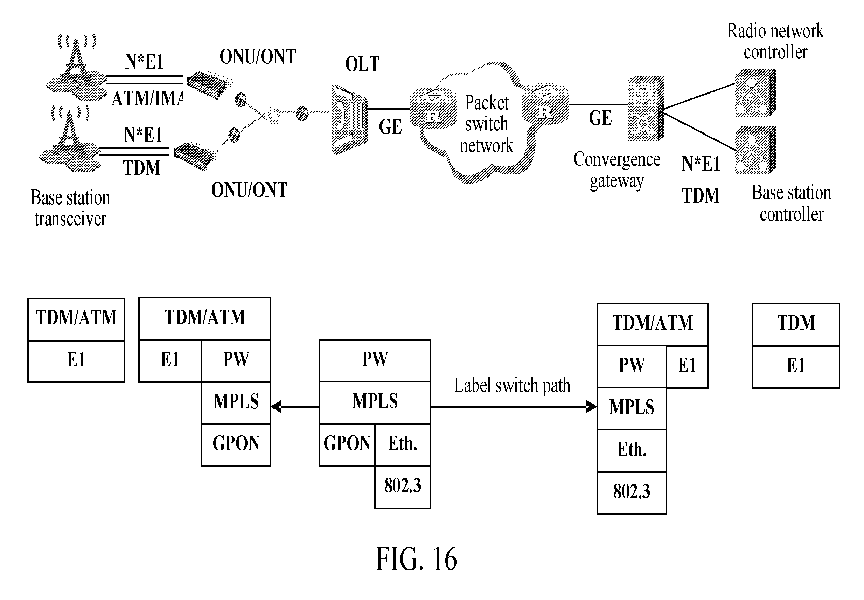

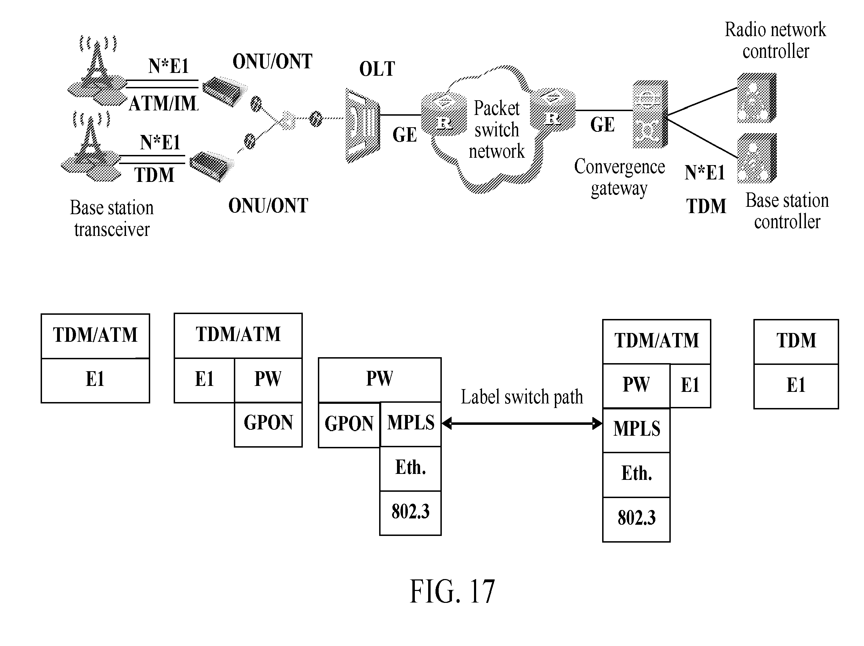

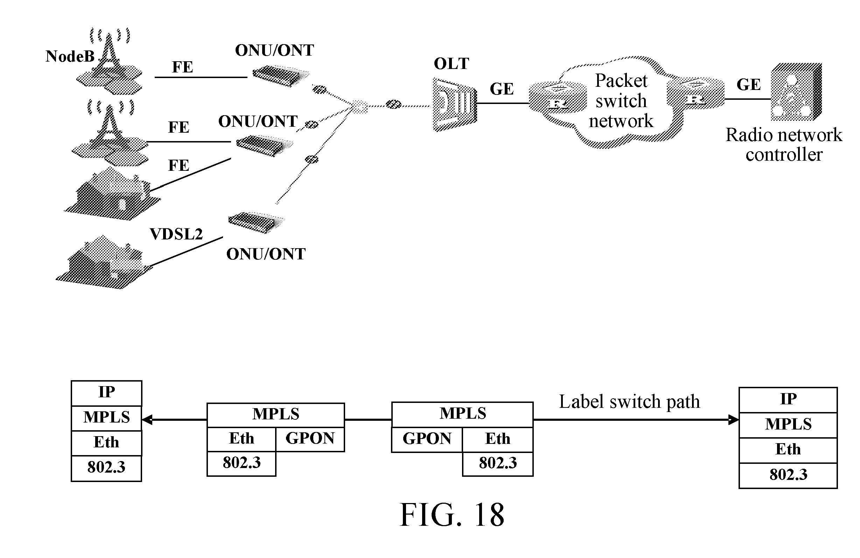

FIG. 17 is a connection diagram of a communication system for bearing an MPLS packet in a PON when receiving data having a PW encapsulation structure. In this system, the PW data payload is encapsulated into an MPLS packet having an inner layer label or a PW packet having an emulation circuit identifier and a PW control word. FIG. 16 is a connection diagram of the communication system for bearing an MPLS packet in a PON when receiving data having a PW encapsulation structure. Different from FIG. 17, in this system, the MPLS packet having the inner layer label is further encapsulated into an MPLS packet having an outer layer label. FIG. 18 is a connection diagram of the communication system for bearing an MPLS packet in a PON when receiving Internet Protocol (IP) packet data.

The flow chart of the optical communication system is described roughly in the following. For a time division multiplexing, TDM, frame (as shown in FIG. 16 or 17) or an Ethernet frame (as shown in FIG. 18) from a base station, BS, the ONU/ONT obtains an MPLS packet by encapsulating data of the TDM frame into an MPLS-based PW or by removing an Ethernet header, then performs GEM encapsulation frame processing, GTC framing processing, and PON physical layer processing on the MPLS packet, and finally transfers the processed MPLS packet to the OLT through the ODN. The OLT performs corresponding PON physical layer processing, GTC de-framing processing, and GEM decapsulation frame processing on the packet from the ONU/ONT to obtain an MPLS packet, switches the MPLS, and transports the MPLS packet out through a network side interface, and vice versa.

In the embodiments of the present invention, tight coupling between various PONs such as a GPON or a next generation PON network evolved from the GPON technology and a mobile network can be realized, protocol stack layers when a PON is used for base station backhaul can be simplified, overhead of the protocol stack layers can be effectively reduced, bearing efficiency can be improved, and the bandwidth bottleneck problem for the PON in base station backhaul can be solved. Specifically, in order to ensure real-time voice transmission, encoded voice data transmitted through a network is transmitted on the network in a short packet format. The Request For Comments, RFC5086 and RFC4453 respectively define transmission of structured and unstructured TDM on the MPLS. Taking the structure-agnostic TDM over packet, SAToP, in the RFC4453 as an example, in the case that a T1 signal is borne, a payload of each packet is 193-bit TDM data plus 7-bit padding, that is, 25 bytes, so that the transmission efficiency is Payload Length/(Ethernet Header Length + MPLS Label Stack Length + SAToP Control Word Length + Payload Length) = 24/( 26 + 4*2 + 4 + 25 ) = 24/63= 38%. As can be seen, the major overhead is in the Ethernet header. By removing Ethernet protocol bearing in the MPLS over GEM mode provided in the embodiments in the present invention, the transmission efficiency is Payload Length/(MPLS Label Stack Length + SAToP Control Word Length + Payload Length) = 24/(4*2 + 4 + 25) = 24/37= 65%, and the transmission efficiency is thus nearly doubled.

The above descriptions are merely some exemplary embodiments of the present invention, but not intended to limit the scope of the present invention. Any modification, equivalent replacement, or improvement made without departing from the spirit and principle of the present invention should fall within the scope of the present invention. Therefore, the protection scope of the present invention should be as defined by the appended claims.

## Claims

1. A method for bearing a multi-protocol label switching, MPLS, packet in a passive optical network, PON, comprising:
obtaining an MPLS packet;
encapsulating the MPLS packet into a gigabit PON, GPON, encapsulation mode, GEM, frame; and
sending the GEM frame.

2. The method for bearing an MPLS packet in a PON according to claim 1, wherein
the obtaining the MPLS packet comprises: receiving a pseudo wires, PW, data payload; and encapsulating the PW data payload into an MPLS packet having an inner layer label; or
the obtaining the MPLS packet comprises: receiving a PW data payload; encapsulating the PW data payload into an MPLS packet having an inner layer label; and further encapsulating the MPLS packet having the inner layer label into an MPLS packet having an outer layer label.

3. The method for bearing an MPLS packet in a PON according to claim 1, wherein the encapsulating the MPLS packet into the GEM frame comprises:
segmenting or assembling the MPLS packet, and mapping the segmented or assembled MPLS packet to a payload of the GEM frame; and
adding a GEM header before the payload of the GEM frame.

4. The method for bearing an MPLS packet in a PON according to claim 3, wherein
the segmenting the MPLS packet and mapping the segmented MPLS packet to the payload of the GEM frame comprises: dividing the MPLS packet into at least two MPLS packet segments; and mapping the MPLS packet segments to the payload of the GEM frame; or,
the segmenting the MPLS packet and mapping the segmented MPLS packet to the payload of the GEM frame comprises: extracting an MPLS packet payload and an MPLS header; dividing the MPLS payload into at least two segments; adding an MPLS header before each segment to form a new segment respectively; and mapping the new segment to the payload of the GEM frame.

5. The method for bearing an MPLS packet in a PON according to claim 3, wherein
the GEM header comprises a port identification, Port ID, field or a service type field configured to indicate that a transmission mode is that an MPLS packet is borne over a GEM frame, MPLS over GEM.

6. The method for bearing an MPLS packet in a PON according to claim 1, wherein
the obtaining the MPLS packet comprises: obtaining, by an optical network unit, ONU, or optical network terminal, ONT, the MPLS packet from a customer premises network, CPN; or obtaining, by an optical line termina, OLT, the MPLS packet from a service node function; and
the sending the GEM frame comprises: sending, by the ONU/ONT, the GEM frame to the OLT; or, sending, by the OLT, the GEM frame to the ONU/ONT.

7. A method for receiving a multi-protocol label switching, MPLS, packet in a passive optical network, PON, comprising:
receiving a gigabit PON, GPON, encapsulation mode, GEM, frame;
decapsulating the GEM frame into an MPLS packet; and
sending the MPLS packet.

8. The method for receiving an MPLS packet in a PON according to claim 7, wherein the decapsulating the GEM frame into the MPLS packet comprises:
extracting a GEM frame payload from the GEM frame; and
assembling or segmenting the extracted GEM frame payload to generate the MPLS packet.

9. The method for receiving an MPLS packet in a PON according to claim 8, wherein the assembling the extracted GEM frame payload to generate the MPLS packet comprises:
assembling at least two GEM frame payloads as the MPLS packet; or
acquiring at least two GEM frame payloads, removing MPLS headers in other GEM frame payloads than a first GEM frame payload, and assembling the first GEM frame payload and the other GEM frame payloads with the MPLS headers removed as the MPLS packet.

10. A multi-protocol label switching, MPLS, encapsulation device, comprising:
an MPLS processing unit, configured to obtain an MPLS packet;
an encapsulation processing unit, configured to encapsulate the MPLS packet into a gigabit passive optical network, GPON, encapsulation mode, GEM, frame; and
a sending unit, configured to send the GEM frame.

11. The MPLS encapsulation device according to claim 10, wherein the encapsulation processing unit comprises:
a segmentation/assembly unit, configured to segment or assemble the MPLS packet and map the segmented or assembled MPLS packet to a payload of a PON encapsulation data frame; and
a header adding unit, configured to add a GEM header before the payload of the GEM frame.

12. A multi-protocol label switching, MPLS, decapsulation device, comprising:
a receiving unit, configured to receive a gigabit passive optical network, GPON, encapsulation mode, GEM, frame;
a decapsulation processing unit, configured to decapsulate the GEM frame into an MPLS packet; and
an MPLS sending unit, configured to send the MPLS packet.

13. The MPLS decapsulation device according to claim 12, wherein the decapsulation processing unit comprises:
an extraction unit, configured to extract a GEM frame payload from the GEM frame; and
a segmentation/assembly unit, configured to segment or assemble the extracted GEM frame payload, so as to generate the MPLS packet.

14. An optical communication system, comprising a multi-protocol label switching, MPLS, encapsulation device and an MPLS decapsulation device, wherein the MPLS encapsulation device is configured to:
obtain an MPLS packet;
encapsulate the MPLS packet into a gigabit passive optical network, GPON, encapsulation mode, GEM, frame; and
send the GEM frame to the MPLS decapsulation device; and
the MPLS decapsulation device is configured to:
receive the GEM frame of the MPLS encapsulation device;
decapsulate the GEM frame into an MPLS packet; and
send the MPLS packet.
